# EUROPÄISCHE PATENTSCHRIFT

(11) **EP 0 523 472 B1**
(45) Veröffentlichungstag und Bekanntmachung des Hinweises auf die Patenterteilung: **16.08.1995**
(21) Anmeldenummer: 92111293.4
(22) Anmeldetag: 03.07.1992
(51) Int. Cl.: B60K 17/04, B62D 47/02

(54) **Portalachse für einen Omnibus, insbesondere Niederflurbus**
Axle for a bus especially of the low floor type
Essieu portique pour un autobus, en particulier à plancher surbaissé

(30) Priorität: 19.07.1991 DE 4124016
(43) Veröffentlichungstag der Anmeldung: 20.01.1993
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Dipl.-Ing. (FH), W-8000 München 40 (DE); Uttenthaler, Josef, Dipl.-Ing., W-8068 Hettenshausen (DE)

(56) Entgegenhaltungen:
- DE-A- 2 418 810
- DE-B- 1 455 654
- FR-A- 2 180 210

## Beschreibung

Die Erfindung betrifft eine Portalachse für einen Omnibus, insbesondere Niederflurbus, mit Merkmalen entsprechend dem Oberbegriff des Anspruchs 1.

Die Erfindung geht aus von einem Stand der Technik, repräsentiert durch die ZF-Portalachse AV 130, offenbart in einem entsprechenden Prospekt der Zahnradfabrik Friedrichshafen AG vom März 1986. Das Charakteristische dieser Portalachse ist dabei im Bereich des Stirnradgetriebes in der Weise gegeben, daß dieses aus vier Stirnrädern besteht, wobei mit der Verzahnung des ersten, mit dem Ausgleichsdifferential verbundenen Stirnrades jeweils an seitlich gegenüberliegenden Stellen ein zweites und drittes Stirnrad in Eingriff stehen und in deren Verzahnung wiederum ein viertes Stirnrad eingreift, das mit dem zugehörigen Rad bzw. Radsatz verbunden ist. Die Baugröße dieses Stirnradgetriebes sowie der Achsabstand zwischen der Rotationsachse des vierten und ersten Stirnrades ist dabei einerseits durch die gewünschte Übersetzung sowie den Durchmesser der Stirnräder und jene Maßgabe vorgegeben, daß das vierte Stirnrad nicht in die Verzahnung des ersten Stirnrades eingreifen darf.

Obschon diese Ausgestaltung des Stirnradgetriebes bereits eine relativ niedrig in Bezug auf die Fahrbahn mögliche Anordnung des Achskörpers der Portalachse zuläßt, stellt sich trotzdem der Erfindung die Aufgabe, eine Portalachse zu schaffen, die eine noch niedrigere Achskörperlage in Bezug auf die Fahrbahn und damit eine noch weitergehende Absenkung des Bodens im Omnibus ermöglicht.

Diese Aufgabe wird erfindungsgemäß durch eine Portalachse der gattungsgemäßen Art in Verbindung mit den kennzeichnenden Merkmalen des Anspruchs 1 gelöst.

Aufgrund der erfindungsgemäßen Ausgestaltung des Stirnradgetriebes ist eine Portalachse realisierbar, deren Achskörper im Vergleich zu jenem bei der Portalachse des eingangs geschilderten Standes der Technik um etwa 5 cm tiefer in Bezug auf die Fahrbahn legbar ist, mit der Folge, daß auch der Boden des Omnibusses insgesamt um ein entsprechendes Maß tiefer legbar ist. Dies bedeutet letztendlich auch niedrigere Einstiege und niedrigere Plattformen sowie weniger komplizierte und auch weniger zeitraubende Maßnahmen, z.B. um ein 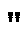 kneeling" an Haltestellen durchzuführen.

Vorteilhafte Ausgestaltungen der erfindungsgemäßen Lösung sind in den Unteransprüchen angegeben.

Nachstehend ist die erfindungsgemäße Lösung anhand eines in der Zeichnung dargestellten Ausführungsbeispieles noch näher erläutert. In der Zeichnung zeigen:

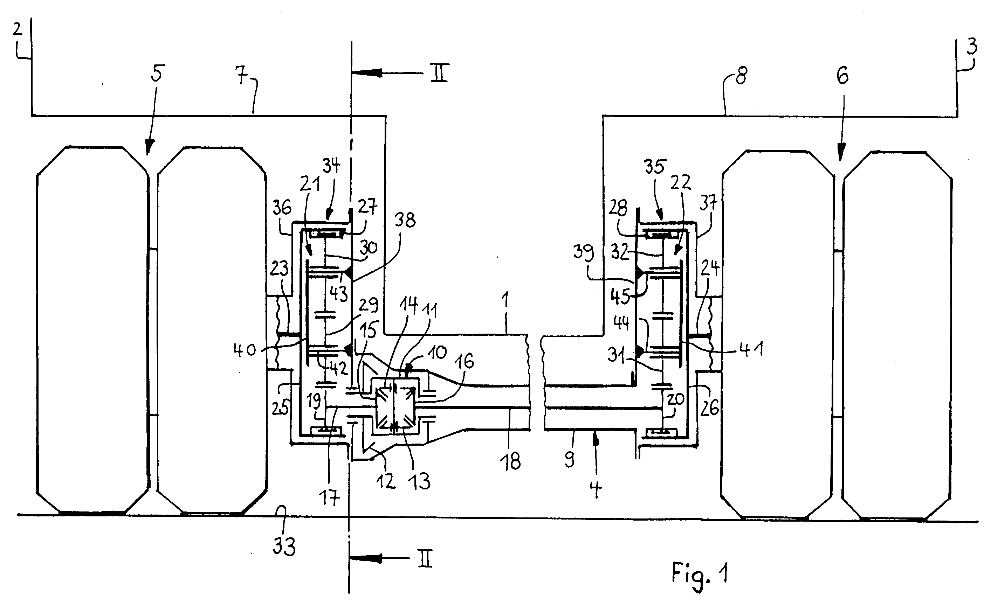

- Fig. 1: schematisiert eine Portalachse nach der Erfindung, und
- Fig.2: einen Schnitt durch die Portalachse gemäß Fig. 1 entlang der dortigen Schnittlinie II-II
In der Zeichnung sind als Teile eines Omnibusses, insbesondere Niederflurbusses, dessen Boden mit 1, dessen Seitenwände mit 2, 3, mit 4 die Portalachse, mit 5, 6, die beiderseits derselben angeschlossenen Räder bzw. Radsätze sowie mit 7, 8 die letztere überdeckenden sowie in den Boden 1 übergehenden Radkästen bezeichnet.

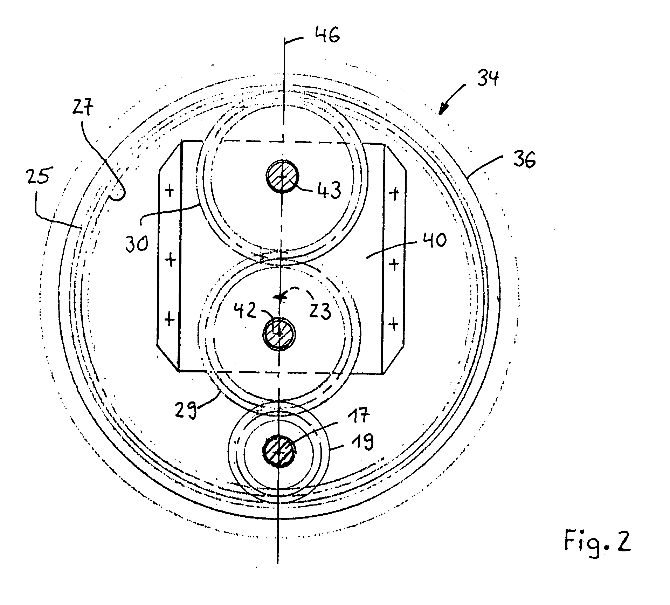

Die Portalachse 4 umfaßt einen hohlen Achskörper 9, in den im Bereich einer räumlichen Erweiterung ein Momententeiler 10, beispielsweise realisiert durch ein Ausgleichsdifferential, eingebaut ist. Letzteres hat einen üblichen Aufbau und besteht somit aus einem im Achskörper 9 drehbar gelagerten Umlaufgehäuse 11, mit dem ein äußeres Tellerrad 12 fest verbunden ist, das wiederum mit dem mit dem Antrieb des Omnibusses verbundenen Antriebsritzel (nicht dargestellt) in Eingriff steht. Im Umlaufgehäuse 11 sind ferner zwei Kegelräder 13, 14 gelagert, die beide jeweils mit den beiden abtriebsseitigen Kegelrädern 15, 16 in Eingriff stehen. Der Momententeiler 10 ist über seine beiden abtriebsseitigen Achsen 17 bzw. 18, welche im Fall eines Ausgleichsdifferentials drehfest mit den beiden abtriebsseitigen Kegelrädern 15, 16 verbunden sind, mit dem ersten Stirnrad 19 bzw. 20 eines je Achsseite die Antriebsverbindung zum dortigen Rad bzw. Radsatz 5 bzw. 6 herstellenden Stirnradgetriebes 21 bzw. 22 verbunden. Jedes der beiden Stirnradgetriebe 21, 22 weist ein über eine Achse 23 bzw. 24 mit dem zugehörigen Rad bzw. Radsatz 5 bzw. 6 drehfest verbundenes Hohlrad 25 bzw. 26 mit Innenverzahnung 27 bzw. 28 auf und besteht desweiteren jeweils aus dem ersten Stirnrad 19 bzw. 20 sowie zwei weiteren, jeweils durchmessergrößeren Stirnrädern 29, 30 bzw. 31, 32. Das erste Stirnrad 19 bzw. 20 des jeweiligen Stirnradgetriebes 21 bzw. 22 ist vorzugsweise frei schwimmend am äußeren Ende der Achse 17 bzw. 18 angeordnet und greift an einem tiefen, vorzugsweise dem tiefsten Punkt in die Innenverzahnung 27 bzw. 28 des Hohlrades 25 bzw. 26 ein. Das dritte Stirnrad 30 bzw. 32 des jeweiligen Stirnradgetriebes 21 bzw. 22 greift dagegen dem ersten (19 bzw. 20) diametral gegenüber in die Innenverzahnung 27 bzw. 28 des Hohlrades 25 bzw. 26 ein. Das jeweils zweite, mittlere Stirnrad 29 bzw. 31 jedes Stirnradgetriebes 21 bzw. 22 stellt jeweils die Verbindung zwischen erstem (19 bzw. 20) und drittem Stirnrad 30 bzw. 32 her. Die Rotationsachsen aller drei Stirnräder 19, 29, 30 bzw. 20, 31, 32 liegen jeweils in einer gemeinsamen, vorzugsweise vertikal zur Fahrbahn 33 stehenden Geraden (siehe Linie 46 in Fig. 2). Außerdem sind wenigstens das zweite und dritte Stirnrad 29, 30 bzw. 31, 32, gegebenenfalls auch das erste Stirnrad 19 bzw. 20, jeweils ortsfest im Gehäuse 34 bzw. 35 des Stirnradgetriebes 21 bzw. 22 gelagert. Im dargestellten Ausführungsbeispiel ist hierzu das Gehäuse 34 bzw. 35 jeweils zweiteilig ausgebildet, wobei der eine Teil 36 bzw. 37 außenseitig am Radträger des jeweiligen Rades bzw. Radsatzes 5 bzw. 6 angeflanscht und innenseitig durch einen demontierbaren Deckel 38 bzw. 39 abgeschlossen ist. Zwischen dem jeweiligen Deckel 38, 39 und einen von ihm beabstandeten, mit ihm über im einzelnen nicht dargestellte Zuganker lösbar verbundenen und im Innenraum des jeweiligen Hohlrades 25 bzw. 26 angeordneten Lagerschild 40 bzw. 41 erstrecken sich die Lagerachsen 42, 43 bzw. 44, 45 des jeweils zweiten und dritten Stirnrades 29, 30 bzw. 31, 32. Lagerschild 40 bzw. 41 und Deckel 38 bzw. 40 sind dabei vorzugsweise jeweils durch ebene, parallel zueinander verlaufende Platten gebildet.

Der Durchmesser des jeweils ersten Stirnrades 19 bzw. 20 jedes Stirnradgetriebes 21 bzw. 22 ist unter der Vorgabe eines bestimmten Übersetzungsverhältnisses so klein wie möglich festzulegen, um über die durchmessergrößeren zweiten und dritten Stirnräder 29, 30 bzw. 31, 32 einen möglichst großen Achsabstand zwischen den Rotationsachsen von Hohlrad und erstem Stirnrad zu erzielen. Das Flankenspiel zwischen den Verzahnungen des ersten Stirnrades 19 bzw. 20 und des Hohlrades 25 bzw. 26 entspricht der Summe der drei anderen Verzahnungs-Flankenspiele innerhalb des Stirnradgetriebes 21 bzw. 22.

Aufgrund der erfindungsgemäßen Ausgestaltung des Stirnradgetriebes befinden sich dessen Stirnräder und dessen Hohlrad im Kräftegleichgewicht, wodurch sich auch der Lagerungsaufwand reduziert. Außerdem lassen sich auf diese Weise auch sehr hohe Übersetzungsverhältnisse erzielen, die ansonsten üblicherweise nur über Planetengetriebe möglich sind.

## Patentansprüche

1. Portalachse (4) für einen Omnibus, insbesondere Niederflurbus, mit einem in den hohlen Achskörper (9) eingebauten Momententeiler (10), beispielsweise realisiert durch ein Ausgleichsdifferential, dessen beide abtriebsseitigen Achsen (17 bzw. 18) mit dem ersten Zahnrad (19 bzw. 20) eines je Achsseite die Antriebsverbindung zum dortigen Rad bzw. Radsatz (5 bzw. 6) herstellenden Stirnradgetriebes (21 bzw. 22) verbunden sind, dadurch gekennzeichnet, daß jedes der beiden Stirnradgetriebe (21 bzw. 22) aus einem mit dem zugehörigen Rad bzw. Radsatz (5 bzw. 6) verbundenen Hohlrad (25 bzw. 26), dem ersten (19 bzw. 20) und zwei weiteren, durchmessergrößeren Stirnrädern (29, 30 bzw. 31, 32) besteht, wobei das erste Stirnrad (19 bzw. 20) an einem tiefen Punkt sowie das dritte Stirnrad (30 bzw. 32) diametral gegenüber in die Innenverzahnung (27 bzw. 28) des Hohlrades (25 bzw. 26) eingreift und das zweite, mittlere Stirnrad (29 bzw. 31) die Verbindung zwischen erstem und drittem Stirnrad herstellt, wobei ferner die Rotationsachsen aller drei Stirnräder (19, 29, 30 bzw. 20, 31, 32) in einer jeweils gemeinsamen Geraden (46) liegen und wenigstens das zweite und dritte Stirnrad (29, 30 bzw. 31, 32) ortsfest im jeweiligen Gehäuse (34 bzw. 35) des Stirnradgetriebes (21 bzw. 22) gelagert sind.

2. Portalachse nach Anspruch 1, dadurch gekennzeichnet, daß das Gehäuse (34 bzw. 35) jedes Stirnradgetriebes (21 bzw. 22) zweiteilig ausgebildet und mit seinem äußeren Teil (36 bzw. 37) am Radträger des Rades bzw. Radsatzes (5 bzw. 6) angeflanscht sowie innenseitig durch einen demontierbaren Deckel (38 bzw. 39) abgeschlossen ist, zwischen welchem und einem beabstandeten, mit ihm über Zuganker lösbar verbundenen und im Innenraum des Hohlrades (25 bzw. 26) angeordneten Lagerschild (40 bzw. 41) sich die Lagerachsen (42, 43 bzw. 44, 45) des zweiten und dritten Stirnrades (29, 30 bzw. 31, 32) erstrecken.

3. Portalachse nach Anspruch 1, dadurch gekennzeichnet, daß das Flankenspiel zwischen den Verzahnungen des ersten Stirnrades (19 bzw. 20) und des Hohlrades (25 bzw. 26) der Summe der drei anderen Verzahnungs-Flankenspiele innerhalb des Stirnradgetriebes (21 bzw. 22) entspricht.

## Claims

1. Portal axle (4) for a bus, particularly a low-floor bus, with a torque divider (10) installed in the hollow axle beam (9), which torque divider is eg a differential whose two output shafts (17 and 18) are connected with the first gear (19 and 20 respectively) of the set of spur gears (21 and 22 respectively) establishing the drive connection to the wheel or set of wheels (5 and 6 respectively) at each end of the axle, characterised in that each of the two sets of spur gears (21 and 22) consists of a ring gear (25 and 26 respectively) connected with the relevant wheel or set of wheels (5 and 6 respectively), the first (19 and 20 respectively) and two further spur gears (29, 30 and 31, 32 respectively) with larger diameters, the first spur gear (19 and 20 respectively) meshing with the internal toothing (27 and 28 respectively) of the ring gear (25 and 26 respectively) at a deep point and the third spur gear (30 and 32 respectively) meshing with the said internal toothing diametrically opposite, and the second, centre spur gear (29 and 31 respectively) establishing the connection between the first and third spur gear, the rotational axes of all three spur gears (19, 29, 30 and 20, 31, 32 respectively) each forming a common line (46) and at least the second and third spur gears (29, 30 and 31, 32 respectively) being supported stationary in the respective housing (34 and 35) of the respective set of spur gears (21 and 22).

2. Portal axle according to Claim 1, characterised in that the housing (34 and 35 respectively) of each set of spur gears (21 and 22) consists of two parts and whose outer part (36 and 37 respectively) is flanged on the wheel carrier of the wheel or set of wheels (5 and 6 respectively) and is closed on the inside by a detachable cover (38 and 39 respectively), between which cover and a bearing shield (40 and 41 respectively) placed at a distance, detachably connected with the said cover via a tie rod and arranged in the interior of the ring gear (25 and 26 respectively) the bearing shafts (42, 43 and 44, 45 respectively) of the second and third spur gears (29, 30 and 31, 32 respectively) are located.

3. Portal axle according to Claim 1, characterised in that the backlash between the toothing of the first spur gear (19 and 20 respectively) and the ring gear (25 and 26 respectively) is identical with the sum of the three other toothing backlashes within the set of spur gears (21 and 22 respectively).

## Revendications

1. Essieu portique (4) pour un autobus notamment un autobus à plancher surbaissé, comportant un diviseur de couple (10) monté dans le corps (9) creux de l'essieu, réalisé par exemple par un différentiel de compensation dont les deux essieux de sortie (17, 18) sont reliés avec la première roue dentée (19 ou 20) de chaque côté de l'essieu, pour la liaison de transmission avec la roue correspondante ou le jeu de roues correspondant (5 ou 6) par la transmission à roues frontales (21 ou 22) correspondante, caractérisé en ce que chacune des deux transmissions à roues frontales (21 ou 22) se compose d'une roue creuse (25, 26) reliée à la roue correspondante ou au jeu de roues correspondant (5, 6), avec une première (19 ou 20) et deux autres roues frontales de plus grand diamètre (29, 30 ou 31, 32), la première roue frontale (19 ou 20) étant en prise en un point bas et la troisième roue frontale (30 ou 32) étant en prise diamétralement opposée dans la denture intérieure (27 ou 28) de la roue creuse (25 ou 26) et la seconde roue frontale médiane (29 ou 31) réalise la liaison entre la première et la troisième roue frontale, et en outre, les axes de rotation de toutes les trois roues frontales (19, 29, 30 ou 20, 31, 32) sont situés sur une même droite (46) et au moins la seconde et la troisième roue frontale (29, 30 ou 31, 32) sont montées de manière fixe dans le carter respectif (34 ou 35) de la transmission à roues frontales (21, 22) correspondante.

2. Essieu portique selon la revendication 1, caractérisé en ce que le carter (34 ou 35) de chaque transmission à roues frontales (21 ou 22) est réalisé en deux parties et est bridé avec sa partie extérieure (36 ou 37) sur le porte-roues de la roue ou du jeu de roues (5 ou 6), tout en étant fermé du côté intérieur par un couvercle démontable (38 ou 39), entre celui-ci et à une certaine distance de celui-ci, avec un panneau de palier (40 ou 41) monté de manière amovible par des tirants, reliés à celui-ci et logés dans la cavité de la roue creuse (25, 26), s'étendent les axes de palier (42, 43 ou 44, 46) de la seconde et de la troisième roue frontale (29, 30 ou 31, 32).

3. Essieu portique selon la revendication 1, caractérisé en ce que le jeu des flancs entre les dentures de la première roue frontale (19 ou 20) et de la roue creuse (25 ou 26), correspond à la somme des jeux des trois autres flancs de denture à l'intérieur de la transmission à roues frontales (21 ou 22).
